(19) Europäisches Patentamt

European Patent Office

Office européen des brevets

(11) **EP 0 997 068 A1**

(12) **EUROPEAN PATENT APPLICATION**

(43) Date of publication:
**03.05.2000 Bulletin 2000/18**

(21) Application number: **99308172.8**

(22) Date of filing: **18.10.1999**

(51) Int. Cl.$^7$: **A01N 47/42**
// (A01N47/42, 59:00, 57:34, 47:48, 47:44, 43:80, 43:78, 43:50, 43:26, 37:34, 37:16, 35:08, 35:02, 33:12, 33:08)

(84) Designated Contracting States:
**AT BE CH CY DE DK ES FI FR GB GR IE IT LI LU MC NL PT SE**
Designated Extension States:
**AL LT LV MK RO SI**

(30) Priority: **29.10.1998 US 106139**

(71) Applicant: **ROHM AND HAAS COMPANY**
**Philadelphia, Pennsylvania 19106-2399 (US)**

(72) Inventors:
• **Antes, Diane Lynn**
 **Richboro, Pennsylvania 18954 (US)**
• **Williams, Terry Michael**
 **Lower Gwynedd, Pennsylvania 19002 (US)**

(74) Representative:
**Buckley, Guy Julian et al**
**ROHM AND HAAS (UK) LTD.**
**European Operations Patent Department**
**Lennig House**
**2 Mason's Avenue**
**Croydon CR9 3NB (GB)**

(54) **Synergistic microbicidal combinations**

(57) Disclosed are microbicidal compositions of a synergistic mixture, the first component of which is ((butylaminocarbonyl)oxy)carbonimidic-dibromide and the second component of which is one or more commercial microbicides, wherein the ratio of the first component to the second component is in the range of 1:0.03 to 1:1000. Also disclosed are methods of inhibiting the growth of microorganisms using these synergistic mixtures.

EP 0 997 068 A1

Printed by Xerox (UK) Business Services
2.16.7 (HRS)/3.6

## Description

Background of the Invention

This invention relates generally to synergistic microbicidal combinations. In particular, this invention relates to synergistic microbicidal combinations of ((butylaminocarbonyl)oxy)carbonimidic-dibromide with one or more commercial microbicides.

EP 824862 A1 (Hsu et al.) discloses the use of ((butylaminocarbonyl)oxy)carbonimidic-dibromide as a microbicide. The fast speed of kill of ((butylaminocarbonyl)oxy)carbonimidic-dibromide makes it a very effective microbicide in a variety of loci, such as cooling towers, air washers, wastewater treatment, mineral slurries, and the like. The suggested dosage sometimes cannot achieve the best results for the control of microorganisms due to interfering components or to less sensitive organisms in the locus to be protected. To provide effective control of microorganisms in these systems, additional ((butylaminocarbonyl)oxy)carbonimidic-dibromide must be added, which increases the cost.

Many other microbicidal agents are known. These are commercially available for the control of microorganisms in a variety of loci. Sometimes, many of these microbicides cannot provide effective control of microorganisms even at high use concentrations due to weak activity against certain microorganisms. Without effective microorganisms control, loss of product, inferior product, production time loss, health hazard, and other problems may occur in the loci treated.

Thus, more effective and broader methods of controlling microorganisms are needed.

Summary of the Invention

It has now been surprisingly found that combinations of ((butylaminocarbonyl)oxy)carbonimidic-dibromide with certain known microbicides provide more effective control of microorganisms compared to the use of the compounds individually.

The present invention is directed to a microbicidal composition comprising a synergistic mixture the first component of which is ((butylaminocarbonyl)oxy)carbonimidic-dibromide and the second component of which is one or more commercial microbicides selected from the group consisting of nitrogen- or sulfur-containing heterocyclic microbicides, oxidizing microbicides, cationic microbicides, halogenated aromatic microbicides, acyclic carbonyl-containing microbicides, acyclic nitro-containing microbicides, 1,2-dibromo-2,4-dicyanobutane, hexachlorodimethylsulfone, methylene bis(thiocyanate), 2-hydroxypropyl methanethiosulfonate, ortho-phenyl-phenol, and ortho-phenyl-phenolate salts, wherein the ratio of the first component to the second component is in the range of 1:0.03 to 1:1000.

The present invention is also directed to a method of inhibiting the growth of microorganisms in a locus comprising introducing to, at or on the locus a microorganism inhibiting amount of a synergistic mixture the first component of which is ((butylaminocarbonyl)oxy)carbonimidic-dibromide and the second component of which is one or more commercial microbicides selected from the group consisting of nitrogen- or sulfur-containing heterocyclic microbicides, oxidizing microbicides, cationic microbicides, halogenated aromatic microbicides, acyclic carbonyl-containing microbicides, acyclic nitro-containing microbicides, 1,2-dibromo-2,4-dicyanobutane, hexachlorodimethylsulfone, methylene bis(thiocyanate), 2-hydroxypropyl methanethiosulfonate, ortho-phenyl-phenol, and ortho-phenyl-phenolate salts, wherein the ratio of the first component to the second component is in the range of 1:0.03 to 1:1000.

Detailed Description of the Invention

As used throughout the specification, the following terms shall have the following meanings unless the context clearly indicates otherwise.

The term "microbicide" refers to a compound capable of inhibiting the growth of or controlling the growth of microorganisms at a locus. The term "microorganisms" includes, but is not limited to, fungi, bacteria, and algae. The term "locus" refers to an industrial system or product subject to contamination by microorganisms.

As used in this specification, the following abbreviations have the following meanings: ppm = parts per million; ATCC = American Type Culture Collection; C = Centigrade; mL = milliliter; μL = microliter; ppm = parts per million; and MIC = minimum inhibitory concentration. All ranges are inclusive.

((Butylaminocarbonyl)oxy)carbonimidic-dibromide, also known as N-(n-butyl)-dibromoformaldoxime carbamate (herein referred to as "DBFOC"), may be prepared by any known method. For example, DBFOC may be prepared according to EP 824862 A1, herein incorporated by reference to the extent it teaches the preparation of such compound.

DBFOC may be used in the synergistic mixtures of the present invention as is or may first be formulated with a solvent or a solid carrier. Suitable solvents include, but are not limited to: water; glycols, such as ethylene glycol, propylene glycol, diethylene glycol, dipropylene glycol, polyethylene glycol, and polypropylene glycol; glycol ethers; aromatic hydrocarbons, such as toluene and xylene; alcohols, such as methanol, ethanol, propanol, benzyl alcohol, phenethyl alcohol, phenoxypropanol, and phenoxyethanol; ketones, such as acetone and methyl ethyl ketone; esters, such as ethyl acetate, butyl acetate, triacetyl citrate, and glycerol triacetate; carbonates, such as propylene carbonate and dimethyl carbonate; and mixtures thereof. It is preferred that the solvent is selected from glycols; glycol ethers; esters; and mixtures thereof. Suitable solid carriers include, but are not limited to: cyclodextrin; silicas; diatomaceous earth; waxes; cellulosic materials; charcoal; and the like. It is preferred that the DBFOC is formulated in a solvent.

When the DBFOC is formulated in a solvent, the formulation may optionally contain surfactants. When such formulations containing surfactants, they are generally in the form of emulsive concentrates, emulsions, microemulsive concentrates, or microemulsions. Emulsive concentrates form emulsions upon the addition of a sufficient amount of water. Microemulsive concentrates form microemulsions upon the addition of a sufficient amount of water. Such emulsive and microemulsive concentrates are generally well known in the art. For example, US 5,444,078 (Yu) discloses the preparation of various microemulsions and microemulsive concentrates and is incorporated by reference to the extent it teaches such preparations. It is preferred that such formulations are free of surfactants.

The DBFOC formulations may optionally contain additional ingredients, such as thickeners, anti-freeze agents, dispersants, colorants, and the like.

The second microbicide component of the combinations of the present invention are well-known and generally commercially available microbicides, and include nitrogen- or sulfur-containing heterocyclic microbicides, oxidizing microbicides, cationic microbicides, halogenated aromatic microbicides, acyclic carbonyl-containing microbicides, acyclic nitro-containing microbicides, 1,2-dibromo-2,4-dicyanobutane, hexachlorodimethylsulfone, methylene bis(thiocyanate), 2-hydroxypropyl methanethiosulfonate, ortho-phenyl-phenol, and ortho-phenyl-phenolate salts. These microbicides may be used in the synergistic mixtures of the present invention as is or may first be formulated with a solvent or a solid carrier. Suitable solvents and solid carriers are those described above for DBFOC.

Any formulation of DBFOC may be used with any formulation of the second microbicide component in the synergistic mixtures of the present invention. When both the DBFOC and the second microbicide component are each first formulated with a solvent, the solvent used for DBFOC may be the same as or different from the solvent used to formulate the other commercial microbicide. It is preferred that the two solvents are miscible. In the alternative, the DBFOC and the other microbicide may be combined directly and then a solvent added to the mixture.

The DBFOC and the second microbicide component are synergistic when combined in any ratio from 1:0.03 to 1:1000.

Those skilled in the art will recognize that the DBFOC and the second microbicide component of the present invention may be added to a locus sequentially, simultaneously, or may be combined before being added to the locus. It is preferred that the DBFOC and the second microbicide component be added to a locus simultaneously or combined prior to being added to the locus. When the microbicides are combined prior to being added to a locus, such combination may optionally contain solvent, thickeners, anti-freeze agents, colorants, dispersants, surfactants, stabilizers, scale inhibitors, anti-corrosion additives, and the like.

The nitrogen- or sulfur-containing microbicides that are synergistic with DBFOC are selected from the group consisting of: 5-chloro-2-methyl-3-isothiazolone; 2-methyl-3-isothiazolone; 4,5-dichloro-2-n-octyl-3-isothiazolone; 2-n-octyl-3-isothiazolone; 1,2-benzisothiazolin-3-one; 5-oxo-3,4-dichloro-1,2-dithiol; 4,5-dichloro-2-cyclohexyl-3-isothiazolone; 2-methyl-4,5-trimethylene-3-isothiazolone; 2-(4-thiazolyl)-benzimidazole; N-benzimidazol-2-ylcarbamic acid methylester; 3,5-dimethyl-tetrahydro-1,3,5-2H thiadiazine-2-thione; hexahydro1,3,5-tris(2-hydroxyethyl)-1,3,5-triazine; and mixtures thereof. It is preferred that the nitrogen- and sulfur-containing microbicides are selected from the group consisting of 5-chloro-2-methyl-3-isothiazolone; 2-methyl-3-isothiazolone; 4,5-dichloro-2-n-octyl-3-isothiazolone; 2-n-octyl-3-isothiazolone; 1,2-benzisothiazolin-3-one; 5-oxo-3,4-dichloro-1,2-dithiol; 4,5-dichloro-2-cyclohexyl-3-isothiazolone; and mixtures thereof. It is more preferred that the nitrogen- and sulfur-containing microbicides are selected from the group consisting of 5-chloro-2-methyl-3-isothiazolone; 2-methyl-3-isothiazolone; 2-n-octyl-3-isothiazolone; 5-oxo-3,4-dichloro-1,2-dithiol; 4,5-dichloro-2-cyclohexyl-3-isothiazolone; and mixtures thereof. The ratio of DBFOC to the heterocyclic microbicide is preferably 1:0.03 to 1:1000.

The oxidizing microbicides that are synergistic with DBFOC are selected from the group consisting of: hypochlorite salts; 3-bromo-1-chloro-5,5-dimethylhydantoin; peroxyacetic acid; hydrogen peroxide; hypobromous acid; a mixture of sodium bromide and trichloroisocyanuric acid; a mixture of sodium bromide and dichloroisocyanuric acid; trichloroisocyanuric acid; chlorine dioxide; and mixtures thereof. It is preferred that the oxidizing microbicide is sodium hypochlorite; 3-bromo-1-chloro-5,5-dimethylhydantoin; peroxyacetic acid; hydrogen peroxide; or mixtures thereof. Suitable hypochlorite salts include, but are not limited to: sodium hypochlorite, calcium hypochlorite, lithium hypochlorite, and potassium hypochlorite. It is preferred that the hypochlorite salt is sodium hypochlorite or calcium hypochlorite. The ratio of DBFOC to the oxidizing microbicide is preferably 1:0.03 to 1:10.

The cationic microbicides that are synergistic with DBFOC are selected from the group consisting of: dodecylguanidine hydrochloride; n-(C$_8$-C$_{18}$)alkyl dimethyl benzylammonium chloride; poly(oxyethylene (dimethyliminio)ethylene (dimethyliminio)ethylene dichloride); 2-(decylthio)ethanamine hydrochloride; poly(hexamethylenebiguanide) hydrochloride; 1,6-di-(4'-chlorophenyldiguanide)-hexane; and mixtures thereof. It is preferred that the cationic microbicide is dodecylguanidine hydrochloride; n-($C_8$-$C_{18}$)alkyl dimethyl benzylammonium chloride; poly(oxyethylene(dimethyliminio)ethylene(dimethyliminio)ethylene dichloride); 2-(decylthio)ethanamine hydrochloride; or mixtures thereof. The ratio of DBFOC to the cationic microbicide is preferably 1:0.3 to 1:120.

The halogenated aromatic microbicides that are synergistic with DBFOC are selected from the group consisting of: diiodomethyl-p-tolysulphone; 2,4,4'-trichloro-2'-hydroxydiphenyl ether; 3,4,4'-trichlorocarbanilide; and mixtures thereof. The ratio of DBFOC to the halogenated aromatic microbicide is preferably 1:0.03 to 1:500.

The acyclic carbonyl-containing microbicides that are synergistic with DBFOC are selected from the group consisting of: 2,2-dibromo-3-nitrilopropionamide; pentane-1,5-dial; 3-iodopropynyl N-butylcarbamate; 1,4-bis(bromoacetoxy)-2-butene; ethylenebisdithiocarbamic acid disodium salt; and mixtures thereof. It is preferred that the acyclic carbonyl-containing microbicide is 2,2-dibromo-3-nitrilopropionamide; pentane-1,5-dial; or mixtures thereof. The ratio of DBFOC to the acyclic carbonyl-containing microbicide is preferably 1:0.1 to 1:15.

The acyclic nitro-containing microbicides that are synergistic with DBFOC are selected from the group consisting of: 2-bromo-2-nitro-1,3-propanediol; dibromonitroethane; and mixtures thereof. It is preferred that the acyclic nitro-containing microbicide is 2-bromo-2-nitro-1,3-propanediol. The ratio of DBFOC to the acyclic nitro-containing microbicide is preferably 1:1 to 1:8.

When 1,2-dibromo-2,4-dicyanobutane is used in the synergistic mixtures of the present invention, it is preferred that the ratio of DBFOC to 1,2-dibromo-2,4-dicyanobutane is 1:0.6 to 1:77. When hexachlorodimethylsulfone is used in the synergistic mixtures of the present invention, it is preferred that the ratio of DBFOC to hexachlorodimethylsulfone is 1:0.3 to 1:500.

It is preferred that when methylene bis(thiocyanate) is used in the synergistic mixtures of the present invention, the ratio of DBFOC to methylene bis(thiocyanate) is 1:0.03 to 1:3. When 2-hydroxypropyl methanethiosulphonate is used in the synergistic mixtures of the present invention, it is preferred that the ratio of DBFOC to 2-hydroxypropyl methanethiosulphonate is 1:0.03 to 1:500.

It is preferred that when ortho-phenyl-phenol or ortho-phenyl-phenolate salts are used in the synergistic mixtures of the present invention, the ratio of DBFOC to the ortho-phenyl-phenyl or ortho-phenyl-phenolate salts is 1:0.03 to 1:500. Suitable ortho-phenyl-phenolate salts include, but are not limited to: sodium ortho-phenyl-phenolate; potassium ortho-phenyl-phenolate; lithium ortho-phenyl-phenolate; ammonium ortho-phenyl-phenolate; magnesium ortho-phenyl-phenolate; calcium ortho-phenyl-phenolate; and mixtures thereof.

The synergistic mixtures of the present invention are useful in inhibiting or controlling the growth of microorganisms in a variety of loci. Suitable loci, include, but are not limited to: cooling towers; air washers; boilers; mineral slurries; wastewater treatment; ornamental fountains; reverse osmosis filtration; ultrafiltration; ballast water; evaporative condensers; heat exchangers; pulp or paper processing fluids; plastics; emulsions; dispersions; paints; marine antifoulant paints; latexes; coatings, such as varnishes; construction products, such as mastics, caulks, and sealants; construction adhesives, such as ceramic adhesives, carpet backing adhesives, and laminating adhesives; industrial or consumer adhesives; photographic chemicals; printing fluids; household products, such as bathroom disinfectants or sanitizers; cosmetics and toiletries; shampoos; soaps; detergents; industrial disinfectants or sanitizers, such as cold sterilants, hard surface disinfectants; floor polishes; laundry rinse water; metalworking fluids; conveyor lubricants; hydraulic fluids; leather and leather products; textiles; textile products; wood and wood products, such as plywood, chipboard, flakeboard, laminated beams, oriented strandboard, hardboard, and particleboard; petroleum processing fluids; fuel; oilfleld fluids, such as injection water, fracture fluids, and drilling muds; agriculture adjuvant preservation; surfactant preservation; medical devices; diagnostic reagent preservation; food preservation, such as plastic or paper food wrap; pools or spas; plants; soil; and seed treatments. It is preferred that the locus is cooling towers; air washers; boilers; mineral slurries; wastewater treatment; heat exchangers; evaporative coolers; pulp or paper processing fluids; emulsions; and dispersions.

The specific amount of the synergistic combinations necessary to inhibit or control the growth of microorganisms in a locus depends upon the particular compounds in the combination and particular locus to be protected. Typically, the amount of the synergistic combinations of the present invention to control the growth of microorganisms in a locus is sufficient if it provides from 0.1 to 2500 ppm of the microbicide combination. It is preferred that the microbicide combination be present in an amount of 0.5 to 250 ppm, and more preferably from 1 to 100 ppm.

It has been discovered that mixtures of DBFOC with one or more of the commercial microbicides of the present invention in a ratio of 1:0.03 to 1:1000 result in synergistic microbicidal activities against a wide range of microorganisms. Synergy occurs when the disruptive interaction on the organisms treated by the two compounds together is greater than the sum of such interactions of both compounds when used alone. Such synergy does not arise from the expected activity of the components or from the expected improvement in activity.

The following examples are presented to illustrate further various aspects of the present invention, but are not intended to limit the scope of the invention in any aspect.

EXAMPLES

The synergism of the combinations of the present invention was demonstrated by testing a wide range of concentrations and ratios of the compounds.

Synergism was determined by an industrially accepted method described by Kull, F.C.; Eisman, P.C.; Sylwestrowicz, H.D. and Mayer, R.L., in Applied Microbiology 9:538-541 (1961), using the ratio determined by:

$$Q_a/Q_A + Q_b/Q_B = \text{Synergy Index ("SI")}$$

wherein

$Q_A$ =    concentration of compound A in ppm, acting alone, which produced an end point (MIC of Compound A).
$Q_a$ =    concentration of compound A in ppm, in the mixture, which produced an end point.
$Q_B$ =    concentration of compound B in ppm, acting alone, which produced an end point (MIC of Compound B).
$Q_b$ =    concentration of compound B in ppm, in the mixture, which produced an end point.

When the sum of $Q_a/Q_A$ and $Q_b/Q_B$ is greater than one, antagonism is indicated. When the sum is equal to one, additivity is indicated, and when less than one, synergism is demonstrated. The lower the SI, the greater the synergy shown by that particular mixture.

Synergy tests were conducted using standard microtiter plate assays with a minimal salt medium containing 0.2% glucose ("M9G" medium). In this method, a wide range of concentrations was tested by preparing two-fold serial dilutions of the compound tested in 96-well microtiter plates. All liquid media transfers were performed with calibrated single or multichannel digital pipettors. Stock solutions of the microbicides were prepared in appropriate solvents and dispensed to the growth medium. All subsequent dilutions in plates were made using M9G medium; the total volume of liquid in each well was 100 μL. Each plate contained a concentration of both microbicides made by serially titrating equal volumes of liquids in two directions in the microtiter plate. Each plate contained a control row for each combination. The control row was for each compound individually, hence, the individual MIC values were also determined. The synergy of the combinations of the present invention was determined against two bacteria, *Enterobacter aerogenes (E. aerogenes)* (ATCC #13048) or *Pseudomonas aeruginosa (P. aeruginosa)* (ATCC #15442). The bacteria were used at a concentration of about $3 \times 10^6$ bacteria per mL. These bacteria are representative of natural contaminants in many water treatment applications. Once each plate was treated with a combination of DBFOC with another commercial microbicide and inoculated with a bacterium, the plates were incubated at 30° C for 24 hours. After incubation, the plates were visually evaluated for bacterial growth (turbidity) to determine the MIC.

The test results for demonstration of synergy of the microbicide combinations of the present invention are shown below in Tables 1 through 20. In each test, Compound B was DBFOC and Compound A was the other commercial microbicide. Each table shows the specific combination of Compound A and Compound B; test results against *E. aerogenes* and *P. aeruginosa;* the end-point activity in ppm measured by the MIC for Compound A alone ($Q_A$), for Compound B alone ($Q_B$), for Compound A in the mixture ($Q_a$), or for Compound B in the mixture ($Q_b$); the calculated SI value; and the range of synergistic ratios for each combination tested (Compound B:Compound A).

Table 1

| Compound A = 3:1 mixture of 5-chloro-2-methyl-3-isothiazolone and 2-methyl-3-isothiazolone Compound B = DBFOC | | | | | | |
|---|---|---|---|---|---|---|
| Microorganism | $Q_A$ | $Q_a$ | $Q_B$ | $Q_b$ | SI | B:A |
| *E. aerogenes* | 0.13 | 0.06 | 2.00 | 0.13 | 0.53 | 1:0.5 |
| | 0.13 | 0.06 | 2.00 | 0.25 | 0.59 | 1:0.2 |
| | 0.13 | 0.06 | 2.00 | 0.50 | 0.71 | 1:0.1 |
| | 0.13 | 0.06 | 2.00 | 1.00 | 0.96 | 1:0.06 |
| | 0.13 | 0.03 | 2.00 | 0.50 | 0.48 | 1:0.06 |
| | 0.13 | 0.03 | 2.00 | 1.00 | 0.73 | 1:0.03 |

Table 1 (continued)

| Compound A = 3:1 mixture of 5-chloro-2-methyl-3-isothiazolone and 2-methyl-3-isothiazolone<br>Compound B = DBFOC | | | | | | |
|---|---|---|---|---|---|---|
| Microorganism | $Q_A$ | $Q_a$ | $Q_B$ | $Q_b$ | SI | B:A |
| P. aeruginosa | 1.00 | 0.50 | 4.00 | 0.25 | 0.56 | 1:2 |
| | 1.00 | 0.50 | 4.00 | 0.50 | 0.63 | 1:1 |
| | 1.00 | 0.50 | 4.00 | 1.00 | 0.75 | 1:0.5 |
| | 1.00 | 0.50 | 4.00 | 2.00 | 1.00 | 1:0.3 |
| | 1.00 | 0.25 | 4.00 | 1.00 | 0.50 | 1:0.3 |
| | 1.00 | 0.25 | 4.00 | 2.00 | 0.75 | 1:0.1 |
| | 1.00 | 0.13 | 4.00 | 2.00 | 0.63 | 1:0.07 |
| | 1.00 | 0.06 | 4.00 | 2.00 | 0.56 | 1:0.03 |

The synergistic ratios of Compound B:Compound A range from 1:0.03 to 1:2.

Table 2

| Compound A = 4,5-dichloro-2-n-octyl-3-isothiazolone<br>Compound B = DBFOC | | | | | | |
|---|---|---|---|---|---|---|
| Microorganism | $Q_A$ | $Q_a$ | $Q_B$ | $Q_b$ | SI | B:A |
| E. aerogenes | 2.00 | 1.00 | 2.00 | 1.00 | 1.00 | 1:1 |
| | 1.25 | 0.63 | 2.00 | 0.50 | 0.75 | 1:1 |
| | 1.25 | 0.63 | 2.00 | 1.00 | 1.00 | 1:0.6 |
| | 1.25 | 0.32 | 2.00 | 1.00 | 0.75 | 1:0.3 |
| | 1.25 | 0.63 | 1.00 | 0.50 | 1.00 | 1:1 |
| P. aeruginosa | 4.00 | 2.00 | 1.00 | 0.50 | 1.00 | 1:4 |
| | 4.00 | 1.00 | 1.00 | 0.50 | 0.75 | 1:2 |
| | 4.00 | 0.50 | 1.00 | 0.50 | 0.63 | 1:1 |
| | 4.00 | 0.25 | 1.00 | 0.50 | 0.56 | 1:0.5 |

The synergistic ratios of Compound B:Compound A range from 1:0.3 to 1:1.

Table 3

| Compound A = 2-methyl-3-isothiazolone | | | | | | |
| Compound B = DBFOC | | | | | | |
| Microorganism | $Q_A$ | $Q_a$ | $Q_B$ | $Q_b$ | SI | B:A |
| E. aerogenes | 2.00 | 1.00 | 2.00 | 0.13 | 0.57 | 1:8 |
| | 2.00 | 1.00 | 2.00 | 0.25 | 0.63 | 1:4 |
| | 2.00 | 1.00 | 2.00 | 0.50 | 0.75 | 1:2 |
| | 2.00 | 1.00 | 2.00 | 1.00 | 1.00 | 1:1 |
| | 2.00 | 0.50 | 2.00 | 0.50 | 0.50 | 1:1 |
| | 2.00 | 0.50 | 2.00 | 1.00 | 0.75 | 1:0.5 |
| | 2.00 | 0.25 | 2.00 | 1.00 | 0.63 | 1:0.3 |
| | 1.00 | 0.50 | 2.00 | 0.50 | 0.75 | 1:1 |
| | 1.00 | 0.50 | 2.00 | 1.00 | 1.00 | 1:0.5 |
| | 1.00 | 0.25 | 2.00 | 1.00 | 0.75 | 1:0.3 |
| P. aeruginosa | 2.00 | 1.00 | 1.00 | 0.13 | 0.63 | 1:8 |
| | 2.00 | 1.00 | 1.00 | 0.25 | 0.75 | 1:4 |
| | 2.00 | 1.00 | 1.00 | 0.50 | 1.00 | 1:2 |
| | 2.00 | 0.50 | 1.00 | 0.50 | 0.75 | 1:1 |
| | 2.00 | 0.25 | 1.00 | 0.50 | 0.63 | 1:0.5 |
| | 1.00 | 0.50 | 1.00 | 0.50 | 1.00 | 1:1 |
| | 1.00 | 0.25 | 1.00 | 0.50 | 0.75 | 1:0.5 |
| | 3.75 | 1.88 | 1.00 | 0.13 | 0.63 | 1:15 |
| | 3.75 | 1.88 | 1.00 | 0.25 | 0.75 | 1:8 |
| | 3.75 | 1.88 | 1.00 | 0.50 | 1.00 | 1:4 |

The synergistic ratios of Compound B:Compound A range from 1:0.3 to 1:15.

Table 4

| Compound A = 2-n-octyl-3-isothiazolone | | | | | | |
| Compound B = DBFOC | | | | | | |
| Microorganism | $Q_A$ | $Q_a$ | $Q_B$ | $Q_b$ | SI | B:A |
| E. aerogenes | 125 | 62.5 | 2.00 | 1.00 | 1.00 | 1:63 |
| | 250 | 125 | 2.00 | 0.50 | 0.75 | 1:250 |
| | 250 | 125 | 2.00 | 1.00 | 1.00 | 1:125 |
| | 250 | 62.5 | 2.00 | 1.00 | 0.75 | 1:63 |
| P. aeruginosa | 500 | 250 | 1.00 | 0.25 | 0.75 | 1:1000 |
| | 500 | 250 | 1.00 | 0.50 | 1.00 | 1:500 |
| | 500 | 125 | 1.00 | 0.50 | 0.75 | 1:250 |
| | 500 | 62.5 | 1.00 | 0.50 | 0.63 | 1:125 |
| | 500 | 31.25 | 1.00 | 0.50 | 0.56 | 1:63 |

The synergistic ratios of Compound B:Compound A range from 1:63 to 1:1000.

Table 5

| Compound A = 1,2-benzisothiazolin-3-one<br>Compound B = DBFOC | | | | | | |
|---|---|---|---|---|---|---|
| Microorganism | $Q_A$ | $Q_a$ | $Q_B$ | $Q_b$ | SI | B:A |
| E. aerogenes | 5.00 | 2.50 | 2.00 | 0.50 | 0.75 | 1:5 |
| | 5.00 | 2.50 | 2.00 | 1.00 | 1.00 | 1:3 |
| | 5.00 | 1.25 | 2.00 | 1.00 | 0.75 | 1:1 |
| P. aeruginosa | 12.50 | 6.25 | 2.00 | 0.25 | 0.63 | 1:25 |
| | 12.50 | 6.25 | 2.00 | 0.50 | 0.75 | 1:13 |
| | 12.50 | 6.25 | 2.00 | 1.00 | 1.00 | 1:6 |
| | 12.50 | 3.13 | 2.00 | 0.50 | 0.50 | 1:6 |
| | 12.50 | 3.13 | 2.00 | 1.00 | 0.75 | 1:3 |
| | 12.50 | 6.25 | 1.00 | 0.25 | 0.75 | 1:25 |
| | 12.50 | 6.25 | 1.00 | 0.50 | 1.00 | 1:13 |
| | 12.50 | 3.13 | 1.00 | 0.50 | 0.75 | 1:6 |

The synergistic ratios of Compound B:Compound A range from 1:1 to 1:25.

Table 6

| Compound A = 5-oxo-3,4-dichloro-1,2-dithiol<br>Compound B = DBFOC | | | | | | |
|---|---|---|---|---|---|---|
| Microorganism | $Q_A$ | $Q_a$ | $Q_B$ | $Q_b$ | SI | B:A |
| E. aerogenes | 0.07 | 0.04 | 1.00 | 0.13 | 0.70 | 1:0.3 |
| | 0.07 | 0.04 | 1.00 | 0.25 | 0.82 | 1:0.2 |
| | 0.07 | 0.04 | 1.00 | 0.50 | 1.10 | 1:0.08 |
| | 0.07 | 0.02 | 1.00 | 0.50 | 0.79 | 1:0.04 |
| P. aeruginosa | 0.14 | 0.07 | 0.50 | 0.13 | 0.76 | 1:0.5 |
| | 0.14 | 0.07 | 0.50 | 0.25 | 1.00 | 1:0.3 |
| | 0.28 | 0.14 | 1.00 | 0.13 | 0.63 | 1:1 |
| | 0.28 | 0.14 | 1.00 | 0.25 | 0.75 | 1:0.6 |
| | 0.28 | 0.14 | 1.00 | 0.50 | 1.00 | 1:0.3 |
| | 0.28 | 0.07 | 1.00 | 0.13 | 0.38 | 1:0.5 |
| | 0.28 | 0.07 | 1.00 | 0.25 | 0.5 | 1:0.3 |
| | 0.28 | 0.07 | 1.00 | 0.50 | 0.75 | 1:0.1 |
| | 0.28 | 0.04 | 1.00 | 0.50 | 0.64 | 1:0.08 |

The synergistic ratios of Compound B:Compound A range from 1:0.1 to 1:1.

Table 7

| Compound A = 4,5-dichloro-2-cyclohexyl-3-isothiazolone Compound B = DBFOC | | | | | | |
|---|---|---|---|---|---|---|
| Microorganism | $Q_A$ | $Q_a$ | $Q_B$ | $Q_b$ | SI | B:A |
| E. aerogenes | 2.50 | 1.25 | 2.00 | 0.50 | 0.75 | 1:3 |
| | 2.50 | 1.25 | 2.00 | 1.00 | 1.00 | 1:1 |
| | 2.50 | 0.63 | 2.00 | 1.00 | 0.75 | 1:0.6 |
| P. aeruginosa | 4.00 | 2.00 | 1.00 | 0.25 | 0.75 | 1:8 |
| | 4.00 | 2.00 | 1.00 | 0.50 | 1.00 | 1:4 |
| | 4.00 | 1.00 | 1.00 | 0.50 | 0.75 | 1:2 |
| | 4.00 | 2.00 | 2.00 | 0.25 | 0.63 | 1:8 |
| | 4.00 | 2.00 | 2.00 | 0.50 | 0.75 | 1:4 |
| | 4.00 | 2.00 | 2.00 | 1.00 | 1.00 | 1:2 |
| | 4.00 | 1.00 | 2.00 | 0.50 | 0.50 | 1:2 |
| | 4.00 | 1.00 | 2.00 | 1.00 | 0.75 | 1:1 |
| | 4.00 | 0.50 | 2.00 | 0.50 | 0.38 | 1:1 |
| | 4.00 | 0.50 | 2.00 | 1.00 | 0.63 | 1:0.5 |
| | 4.00 | 0.25 | 2.00 | 0.50 | 0.31 | 1:0.5 |
| | 4.00 | 0.25 | 2.00 | 1.00 | 0.56 | 1:0.3 |
| | 4.00 | 0.13 | 2.00 | 1.00 | 0.53 | 1:0.1 |
| | 4.00 | 0.06 | 2.00 | 1.00 | 0.52 | 1:0.06 |

The synergistic ratios of Compound B:Compound A range from 1:0.06 to 1:8.

Table 8

| Compound A = sodium hypochlorite Compound B = DBFOC | | | | | | |
|---|---|---|---|---|---|---|
| Microorganism | $Q_A$ | $Q_a$ | $Q_B$ | $Q_b$ | SI | B:A |
| E. aerogenes | 0.50 | 0.25 | 2.00 | 0.13 | 0.56 | 1:2 |
| | 0.50 | 0.25 | 2.00 | 0.25 | 0.63 | 1:1 |
| | 0.50 | 0.25 | 2.00 | 0.50 | 0.75 | 1:0.5 |
| | 0.50 | 0.25 | 2.00 | 1.00 | 1.00 | 1:0.3 |
| | 0.50 | 0.13 | 2.00 | 0.25 | 0.38 | 1:0.5 |
| | 0.50 | 0.13 | 2.00 | 0.50 | 0.50 | 1:0.3 |
| | 0.50 | 0.13 | 2.00 | 1.00 | 0.75 | 1:0.1 |
| | 0.50 | 0.06 | 2.00 | 1.00 | 0.63 | 1:0.06 |
| | 0.50 | 0.03 | 2.00 | 1.00 | 0.56 | 1:0.03 |

Table 8 (continued)

| Compound A = sodium hypochlorite<br>Compound B = DBFOC | | | | | | |
|---|---|---|---|---|---|---|
| Microorganism | $Q_A$ | $Q_a$ | $Q_B$ | $Q_b$ | SI | B:A |
| *P. aeruginosa* | 0.50 | 0.25 | 2.00 | 0.13 | 0.56 | 1:2 |
| | 0.50 | 0.25 | 2.00 | 0.25 | 0.63 | 1:1 |
| | 0.50 | 0.25 | 2.00 | 0.50 | 0.75 | 1:0.5 |
| | 0.50 | 0.25 | 2.00 | 1.00 | 1.00 | 1:0.3 |
| | 0.50 | 0.13 | 2.00 | 0.50 | 0.50 | 1:0.3 |
| | 0.50 | 0.13 | 2.00 | 1.00 | 0.75 | 1:0.1 |
| | 0.50 | 0.06 | 2.00 | 1.00 | 0.63 | 1:0.06 |

The synergistic ratios of Compound B:Compound A range from 1:0.03 to 1:2.

Table 9

| Compound A = 3-bromo-1-chloro-5,5-dimethylhydantoin<br>Compound B = DBFOC | | | | | | |
|---|---|---|---|---|---|---|
| Microorganism | $Q_A$ | $Q_a$ | $Q_B$ | $Q_b$ | SI | B:A |
| *E. aerogenes* | 0.63 | 0.31 | 1.00 | 0.25 | 0.75 | 1:1 |
| | 0.63 | 0.31 | 1.00 | 0.50 | 1.00 | 1:0.6 |
| | 1.25 | 0.63 | 1.00 | 0.13 | 0.63 | 1:5 |
| | 1.25 | 0.63 | 1.00 | 0.25 | 0.75 | 1:3 |
| | 1.25 | 0.63 | 1.00 | 0.50 | 1.00 | 1:1 |
| | 1.25 | 0.31 | 1.00 | 0.25 | 0.50 | 1:1 |
| | 1.25 | 0.31 | 1.00 | 0.50 | 0.75 | 1:0.6 |
| *P. aeruginosa* | 2.50 | 1.25 | 2.00 | 0.13 | 0.56 | 1:10 |
| | 2.50 | 1.25 | 2.00 | 0.25 | 0.63 | 1:5 |
| | 2.50 | 1.25 | 2.00 | 0.50 | 0.75 | 1:3 |
| | 2.50 | 1.25 | 2.00 | 1.00 | 1.00 | 1:1 |
| | 2.50 | 0.63 | 2.00 | 0.13 | 0.31 | 1:5 |
| | 2.50 | 0.63 | 2.00 | 0.25 | 0.38 | 1:3 |
| | 2.50 | 0.63 | 2.00 | 0.50 | 0.50 | 1:1 |
| | 2.50 | 0.63 | 2.00 | 1.00 | 0.75 | 1:0.6 |
| | 2.50 | 0.31 | 2.00 | 1.00 | 0.63 | 1:0.3 |
| | 1.30 | 0.63 | 2.00 | 0.13 | 0.56 | 1:5 |
| | 1.30 | 0.63 | 2.00 | 0.25 | 0.63 | 1:3 |
| | 1.25 | 0.63 | 2.00 | 0.50 | 0.75 | 1:1 |
| | 1.25 | 0.63 | 2.00 | 1.00 | 1.00 | 1:0.6 |
| | 1.25 | 0.31 | 2.00 | 1.00 | 0.75 | 1:0.3 |

The synergistic ratios of Compound B:Compound A range from 1:0.3 to 1:10.

Table 10

| Compound A = peroxyacetic acid<br>Compound B = DBFOC | | | | | | |
|---|---|---|---|---|---|---|
| Microorganism | $Q_A$ | $Q_a$ | $Q_B$ | $Q_b$ | SI | B:A |
| E. aerogenes | 1.00 | 0.50 | 1.00 | 0.50 | 1.00 | 1:1 |
| | 1.00 | 0.25 | 1.00 | 0.50 | 0.75 | 1:0.5 |
| | 2.00 | 1.00 | 1.00 | 0.13 | 0.63 | 1:8 |
| | 2.00 | 1.00 | 1.00 | 0.25 | 0.75 | 1:4 |
| | 2.00 | 1.00 | 1.00 | 0.50 | 1.00 | 1:2 |
| | 2.00 | 0.50 | 1.00 | 0.50 | 0.75 | 1:1 |
| P. aeruginosa | 0.88 | 0.44 | 1.00 | 0.50 | 1.00 | 1:1 |

The synergistic ratios of Compound B:Compound A range from 1:0.5 to 1:8.

Table 11

| Compound A = hydrogen peroxide<br>Compound B = DBFOC | | | | | | |
|---|---|---|---|---|---|---|
| Microorganism | $Q_A$ | $Q_a$ | $Q_B$ | $Q_b$ | SI | B:A |
| E. aerogenes | 6.25 | >6.25 | 1.00 | >1.00 | >1.00 | NA* |
| | 6.25 | 3.13 | 2.00 | 1.00 | 1.00 | 1:3 |
| | 6.25 | 1.57 | 2.00 | 1.00 | 0.75 | 1:2 |
| P. aeruginosa | 10.00 | 5.00 | 1.00 | 0.50 | 1.00 | 1:10 |
| | 10.00 | 5.00 | 2.00 | 0.50 | 0.75 | 1:10 |
| | 10.00 | 5.00 | 2.00 | 1.00 | 1.00 | 1:5 |
| | 10.00 | 2.50 | 2.00 | 1.00 | 0.75 | 1:3 |
| | 10.00 | 1.25 | 2.00 | 1.00 | 0.63 | 1:1 |
| | 10.00 | 0.63 | 2.00 | 1.00 | 0.56 | 1:0.6 |
| | 10.00 | 0.31 | 2.00 | 1.00 | 0.53 | 1:0.3 |

* NA = not applicable

The synergistic ratios of Compound B:Compound A range from 1:0.3 to 1:10.

Table 12

| Compound A = dodecylguanidine hydrochloride Compound B = DBFOC | | | | | | |
|---|---|---|---|---|---|---|
| Microorganism | $Q_A$ | $Q_a$ | $Q_B$ | $Q_b$ | SI | B:A |
| E. aerogenes | 20.00 | 10.00 | 2.00 | 0.13 | 0.57 | 1:77 |
| | 20.00 | 10.00 | 2.00 | 0.25 | 0.63 | 1:40 |
| | 20.00 | 10.00 | 2.00 | 0.50 | 0.75 | 1:20 |
| | 20.00 | 10.00 | 2.00 | 1.00 | 1.00 | 1:10 |
| | 20.00 | 5.00 | 2.00 | 1.00 | 0.75 | 1:5 |
| | 20.00 | 2.50 | 2.00 | 1.00 | 0.63 | 1:3 |
| | 20.00 | 1.25 | 2.00 | 1.00 | 0.56 | 1:1 |
| P. aeruginosa | 30.00 | 15.00 | 0.50 | 0.13 | 0.76 | 1:115 |
| | 30.00 | 15.00 | 0.50 | 0.25 | 1.00 | 1:60 |
| | 60.00 | 30.00 | 1.00 | 0.25 | 0.75 | 1:120 |
| | 60.00 | 30.00 | 1.00 | 0.50 | 1.00 | 1:60 |
| | 60.00 | 15.00 | 1.00 | 0.50 | 0.75 | 1:30 |

The synergistic ratios of Compound B:Compound A range from 1:1 to 1:120.

Table 13

| Compound A = n-(C$_8$-C$_{18}$)alkyl dimethyl benzylammonium chloride Compound B = DBFOC | | | | | | |
|---|---|---|---|---|---|---|
| Microorganism | $Q_A$ | $Q_a$ | $Q_B$ | $Q_b$ | SI | B:A |
| E. aerogenes | 16.00 | 8.00 | 1.00 | 0.13 | 0.63 | 1:62 |
| | 16.00 | 8.00 | 1.00 | 0.25 | 0.75 | 1:32 |
| | 16.00 | 8.00 | 1.00 | 0.50 | 1.00 | 1:16 |
| | 16.00 | 4.00 | 1.00 | 0.50 | 0.75 | 1:8 |
| P. aeruginosa | 16.00 | >16.00 | 0.50 | >0.50 | >1.00 | NA* |

* NA = not applicable

The synergistic ratios of Compound B:Compound A range from 1:8 to 1:62.

Table 14

| Compound A = poly(oxyethylene(dimethylimino)ethylene(dimethylimino)ethylene dichloride) Compound B = DBFOC | | | | | | |
|---|---|---|---|---|---|---|
| Microorganism | $Q_A$ | $Q_a$ | $Q_B$ | $Q_b$ | SI | B:A |
| E. aerogenes | 15.00 | 7.50 | 2.00 | 0.13 | 0.56 | 1:60 |
| | 15.00 | 7.50 | 2.00 | 0.25 | 0.63 | 1:30 |
| | 15.00 | 7.50 | 2.00 | 0.50 | 0.75 | 1:15 |
| | 15.00 | 7.50 | 2.00 | 1.00 | 1.00 | 1:8 |
| | 15.00 | 3.75 | 2.00 | 0.50 | 0.50 | 1:8 |
| | 15.00 | 3.75 | 2.00 | 1.00 | 0.75 | 1:4 |
| | 15.00 | 1.88 | 2.00 | 0.50 | 0.38 | 1:4 |
| | 15.00 | 1.88 | 2.00 | 1.00 | 0.63 | 1:2 |
| | 7.50 | 3.75 | 2.00 | 0.50 | 0.75 | 1:8 |
| | 7.50 | 3.75 | 2.00 | 1.00 | 1.00 | 1:4 |
| | 7.50 | 1.88 | 2.00 | 0.50 | 0.50 | 1:4 |
| | 7.50 | 1.88 | 2.00 | 1.00 | 0.75 | 1:2 |
| P. aeruginosa | 1.25 | 0.63 | 2.00 | 0.25 | 0.63 | 1:3 |
| | 1.25 | 0.63 | 2.00 | 0.50 | 0.75 | 1:1 |
| | 1.25 | 0.63 | 2.00 | 1.00 | 1.00 | 1:0.6 |
| | 1.25 | 0.31 | 2.00 | 1.00 | 0.75 | 1:0.3 |
| | 2.50 | 1.25 | 2.00 | 0.13 | 0.56 | 1:10 |
| | 2.50 | 1.25 | 2.00 | 0.25 | 0.63 | 1:5 |
| | 2.50 | 1.25 | 2.00 | 0.50 | 0.75 | 1:3 |
| | 2.50 | 1.25 | 2.00 | 1.00 | 1.00 | 1:1 |
| | 2.50 | 0.63 | 2.00 | 0.50 | 0.50 | 1:1 |
| | 2.50 | 0.63 | 2.00 | 1.00 | 0.75 | 1:0.6 |
| | 2.50 | 0.31 | 2.00 | 1.00 | 0.63 | 1:0.3 |

The synergistic ratios of Compound B:Compound A range from 1:0.3 to 1:60.

Table 15

| Compound A = 2-(decylthio)ethanamine, hydrochloride salt Compound B = DBFOC | | | | | | |
|---|---|---|---|---|---|---|
| Microorganism | $Q_A$ | $Q_a$ | $Q_B$ | $Q_b$ | SI | B:A |
| E. aerogenes | 20.00 | 10.00 | 1.00 | 0.25 | 0.75 | 1:40 |
| | 20.00 | 10.00 | 1.00 | 0.50 | 1.00 | 1:20 |

Table 15 (continued)

| Compound A = 2-(decylthio)ethanamine, hydrochloride salt<br>Compound B = DBFOC | | | | | | |
|---|---|---|---|---|---|---|
| Microorganism | $Q_A$ | $Q_a$ | $Q_B$ | $Q_b$ | SI | B:A |
| *P. aeruginosa* | 15.00 | 7.50 | 0.50 | 0.25 | 1.00 | 1:30 |
| | 15.00 | 7.50 | 1.00 | 0.13 | 0.63 | 1:58 |
| | 15.00 | 7.50 | 1.00 | 0.25 | 0.75 | 1:30 |
| | 15.00 | 7.50 | 1.00 | 0.50 | 1.00 | 1:15 |

The synergistic ratios of Compound B:Compound A range from 1:30 to 1:58.

Table 16

| Compound A = 2,2-dibromo-3-nitrilopropionamide<br>Compound B = DBFOC | | | | | | |
|---|---|---|---|---|---|---|
| Microorganism | $Q_A$ | $Q_a$ | $Q_B$ | $Q_b$ | SI | B:A |
| *E. aerogenes* | 1.00 | 0.50 | 2.00 | 0.50 | 0.75 | 1:1 |
| | 1.00 | 0.50 | 2.00 | 1.00 | 1.00 | 1:0.5 |
| | 1.00 | 0.25 | 2.00 | 1.00 | 0.75 | 1:0.3 |
| | 1.00 | 0.13 | 2.00 | 1.00 | 0.63 | 1:0.1 |
| *P. aeruginosa* | 1.00 | 0.50 | 1.00 | 0.13 | 0.63 | 1:4 |
| | 1.00 | 0.50 | 1.00 | 0.25 | 0.75 | 1:2 |
| | 1.00 | 0.50 | 1.00 | 0.50 | 1.00 | 1:1 |
| | 1.00 | 0.25 | 1.00 | 0.50 | 0.75 | 1:0.5 |
| | 0.50 | 0.25 | 0.50 | 0.25 | 1.00 | 1:1 |

The synergistic ratios of Compound B:Compound A range from 1:0.1 to 1:4.

Table 17

| Compound A = pentane-1,5-dial<br>Compound B = DBFOC | | | | | | |
|---|---|---|---|---|---|---|
| Microorganism | $Q_A$ | $Q_a$ | $Q_B$ | $Q_b$ | SI | B:A |
| *E. aerogenes* | 7.50 | 3.75 | 2.00 | 0.25 | 0.63 | 1:15 |
| | 7.50 | 3.75 | 2.00 | 0.50 | 0.75 | 1:8 |
| | 7.50 | 3.75 | 2.00 | 1.00 | 1.00 | 1:4 |
| *P. aeruginosa* | 10.00 | >10.00 | 1.00 | >1.00 | >1.00 | NA* |

\* NA = not applicable

The synergistic ratios of Compound B:Compound A range from 1:8 to 1:15.

Table 18

| Compound A = 2-bromo-2-nitro-1,3-propanediol Compound B = DBFOC | | | | | | |
|---|---|---|---|---|---|---|
| Microorganism | $Q_A$ | $Q_a$ | $Q_B$ | $Q_b$ | SI | B:A |
| *E. aerogenes* | 3.75 | 1.88 | 2.00 | 0.25 | 0.63 | 1:8 |
| | 3.75 | 1.88 | 2.00 | 0.50 | 0.75 | 1:4 |
| | 3.75 | 1.88 | 2.00 | 1.00 | 1.00 | 1:2 |
| | 3.75 | 0.94 | 2.00 | 0.50 | 0.50 | 1:2 |
| | 3.75 | 0.94 | 2.00 | 1.00 | 0.75 | 1:1 |
| *P. aeruginosa* | 1.25 | 0.63 | 0.50 | 0.13 | 0.76 | 1:5 |
| | 1.25 | 0.63 | 0.50 | 0.25 | 1.00 | 1:3 |
| | 1.25 | 0.32 | 0.50 | 0.13 | 0.50 | 1:3 |
| | 1.25 | 0.32 | 0.50 | 0.25 | 0.76 | 1:1 |

The synergistic ratios of Compound B:Compound A range from 1:1 to 1:8.

Table 19

| Compound A = 1,2-dibromo-2,4-dicyanobutane Compound B = DBFOC | | | | | | |
|---|---|---|---|---|---|---|
| Microorganism | $Q_A$ | $Q_a$ | $Q_B$ | $Q_b$ | SI | B:A |
| *E. aerogenes* | 10.00 | 5.00 | 4.00 | 0.50 | 0.63 | 1:10 |
| | 10.00 | 5.00 | 4.00 | 1.00 | 0.75 | 1:5 |
| | 10.00 | 5.00 | 4.00 | 2.00 | 1.00 | 1:3 |
| | 10.00 | 2.50 | 4.00 | 1.00 | 0.50 | 1:3 |
| | 10.00 | 2.50 | 4.00 | 2.00 | 0.75 | 1:1 |
| | 10.00 | 1.25 | 4.00 | 2.00 | 0.63 | 1:0.6 |
| *P. aeruginosa* | 20.00 | 10.00 | 0.50 | 0.13 | 0.76 | 1:77 |
| | 20.00 | 10.00 | 0.50 | 0.25 | 1.00 | 1:40 |
| | 20.00 | 5.00 | 0.50 | 0.25 | 0.75 | 1:20 |

The synergistic ratios of Compound B:Compound A range from 1:0.6 to 1:77.

Table 20

| Compound A = methylene bis(thiocyanate) Compound B = DBFOC | | | | | | |
|---|---|---|---|---|---|---|
| Microorganism | $Q_A$ | $Q_a$ | $Q_B$ | $Q_b$ | SI | B:A |
| E. aerogenes | 0.63 | 0.31 | 1.00 | 0.13 | 0.63 | 1:3 |
| | 0.63 | 0.31 | 1.00 | 0.25 | 0.75 | 1:1 |
| | 0.63 | 0.31 | 1.00 | 0.50 | 1.00 | 1:0.6 |
| | 0.63 | 0.16 | 1.00 | 0.13 | 0.38 | 1:1 |
| | 0.63 | 0.16 | 1.00 | 0.25 | 0.50 | 1:0.6 |
| | 0.63 | 0.16 | 1.00 | 0.50 | 0.75 | 1:0.3 |
| | 0.31 | 0.16 | 1.00 | 0.13 | 0.62 | 1:1 |
| | 0.31 | 0.16 | 1.00 | 0.25 | 0.75 | 1:0.6 |
| | 0.31 | 0.16 | 1.00 | 0.50 | 1.00 | 1:0.3 |
| P. aeruginosa | 0.25 | 0.13 | 2.00 | 0.13 | 0.56 | 1:1 |
| | 0.25 | 0.13 | 2.00 | 0.25 | 0.63 | 1:0.5 |
| | 0.25 | 0.13 | 2.00 | 0.50 | 0.75 | 1:0.3 |
| | 0.25 | 0.13 | 2.00 | 1.00 | 1.00 | 1:0.1 |
| | 0.25 | 0.06 | 2.00 | 0.50 | 0.50 | 1:0.1 |
| | 0.25 | 0.06 | 2.00 | 1.00 | 0.75 | 1:0.06 |
| | 0.25 | 0.03 | 2.00 | 1.00 | 0.62 | 1:0.03 |

The synergistic ratios of Compound B:Compound A range from 1:0.03 to 1:3.

The above data clearly demonstrate that the combinations of DBFOC with the compounds of Tables 1-20 are synergistic, as measured by minimum inhibitory concentrations (MIC), and show surprisingly greater activity than the algebraic sum of the individual ingredients which make up the respective compositions.

Comparative Table 1

| Compound A = 2-(thiocyanomethylthio)benzothiazole Compound B = DBFOC | | | | | | |
|---|---|---|---|---|---|---|
| Microorganism | $Q_A$ | $Q_a$ | $Q_B$ | $Q_b$ | SI | B:A |
| E. aerogenes | 30.00 | >30.00 | 0.50 | >0.50 | >1.00 | NA* |
| P. aeruginosa | 12.50 | >12.50 | 0.25 | >0.25 | >1.00 | NA |

   * NA = not applicable

Comparative Table 2

| Compound A = tetrakis(hydroxymethyl)phosphonium chloride<br>Compound B = DBFOC | | | | | | |
|---|---|---|---|---|---|---|
| Microorganism | $Q_A$ | $Q_a$ | $Q_B$ | $Q_b$ | SI | B:A |
| *E. aerogenes* | 32.00 | >32.00 | 0.50 | >0.50 | >1.00 | NA* |
| *P. aeruginosa* | 32.00 | >32.00 | 0.25 | >0.25 | >1.00 | NA |

* NA = not applicable

The above data demonstrate combinations of certain commercial microbicides with DBFOC that are not synergistic.

**Claims**

1. A microbicidal composition comprising a synergistic mixture the first component of which is ((butylaminocarbonyl)oxy)carbonimidic-dibromide and the second component of which is one or more commercial microbicides selected from the group consisting of nitrogen and sulfur-containing heterocyclic microbicides; and oxidizing microbicides, wherein the ratio of the first component to the second component is in the range of 1:0.03 to 1:1000.

2. The composition of claim 1 wherein the heterocyclic microbicides are selected from the group consisting of 5-chloro-2-methyl-3-isothiazolone; 2-methyl-3-isothiazolone; 4,5-dichloro-2-n-octyl-3-isothiazolone; 2-n-octyl-3-isothiazolone; 1,2-benzisothiazolin-3-one; 5-oxo-3,4-dichloro-1,2-dithiol; 4,5-dichloro-2-cyclohexyl-3-isothiazolone; 2-methyl-4,5-trimethylene-3-isothiazolone; 2-(4-thiazolyl)-benzimidazole; N-benzimidazol-2-ylcarbamic acid methylester; 3,5-dimethyl-tetrahydro-1,3,5-2H-thiadiazine-2-thione; hexahydro-1,3,5-tris(2-hydroxyethyl)-1,3,5-triazine; and mixtures thereof.

3. The composition of claim 2 wherein the ratio of ((butylaminocarbonyl)oxy)carbonimidic-dibromide to the heterocyclic microbicide is 1:0.03 to 1:1000.

4. The composition of claim 1 wherein the oxidizing microbicide is selected from the group consisting of hypochlorite salts; 3-bromo-1-chloro-5,5-dimethylhydantoin; peroxyacetic acid; hydrogen peroxide; hypobromous acid; a mixture of sodium bromide and trichloroisocyanuric acid; a mixture of sodium bromide and dichloroisocyanuric acid; trichloroisocyanuric acid; chlorine dioxide; and mixtures thereof.

5. The composition of claim 4 wherein the ratio of ((butylaminocarbonyl)oxy)carbonimidic-dibromide to the oxidizing microbicide is 1:0.03 to 1:10.

6. A method of inhibiting the growth of microorganisms in a locus comprising introducing to, at or on the locus a microorganism inhibiting amount of a synergistic mixture the first component of which is ((butylaminocarbonyl)oxy)carbonimidic-dibromide and the second component of which is one or more commercial microbicides selected from the group consisting of nitrogen and sulfur-containing heterocyclic microbicides; and oxidizing microbicides, wherein the ratio of the first component to the second component is in the range of 1:0.03 to 1:1000.

7. The method of claim 6 wherein the heterocyclic microbicides are selected from the group consisting of 5-chloro-2-methyl-3-isothiazolone; 2-methyl-3-isothiazolone; 4,5-dichloro-2-n-octyl-3-isothiazolone; 2-n-octyl-3-isothiazolone; 1,2-benzisothiazolin-3-one; 5-oxo-3,4-dichloro-1,2-dithiol; 4,5-dichloro-2-cyclohexyl-3-isothiazolone; 2-methyl-4,5-trimethylene-3-isothiazolone; 2-(4-thiazolyl)-benzimidazole; N-benzimidazol-2-ylcarbamic acid methylester; 3,5-dimethyl-tetrahydro-1,3,5-2H thiadiazine-2-thione; hexahydro-1,3,5-tris(2-hydroxyethyl)-1,3,5-triazine; and mixtures thereof.

8. The method of claim 7 wherein the ratio of ((butylaminocarbonyl)oxy)carbonimidic-dibromide to the heterocyclic microbicide is 1:0.03 to 1:1000.

9. The method of claim 6 wherein the oxidizing microbicide is selected from the group consisting of hypochlorite salts;

3-bromo-1-chloro-5,5-dimethylhydantoin; peroxyacetic acid; hydrogen peroxide; hypobromous acid; a mixture of sodium bromide and trichloroisocyanuric acid; trichloroisocyanuric acid; chlorine dioxide; and mixtures thereof.

10. The method of claim 9 wherein the ratio of ((butylaminocarbonyl)oxy)carbonimidic-dibromide to the oxidizing microbicide is 1:0.03 to 1:10.

# EUROPEAN SEARCH REPORT

Application Number

EP 99 30 8172

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X | EP 0 824 862 A (ROHM & HAAS) 25 February 1998 (1998-02-25) * page 2, line 20 - line 35 * * page 4, line 47 - line 52 * | 1-3,6-8 | A01N47/42 //(A01N47/42, 59:00,57:34, 47:48,47:44, 43:80,43:78, 43:50,43:26, 37:34,37:16, 35:08,35:02, 33:12,33:08) |

TECHNICAL FIELDS SEARCHED (Int.Cl.7)

A01N

The present search report has been drawn up for all claims

| Place of search | Date of completion of the search | Examiner |
|---|---|---|
| THE HAGUE | 21 February 2000 | Lamers, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 99 30 8172

This annex lists the patent family members relating to the patent documents cited in the above–mentioned European search report.
The members are as contained in the European Patent Office EDP file on
The European Patent Office is in no way liable for these particulars which are merely given for the purpose of information.

21-02-2000

| Patent document cited in search report | Publication date | Patent family member(s) | Publication date |
|---|---|---|---|
| EP 0824862 A | 25-02-1998 | US 5874476 A | 23-02-1999 |
| | | AU 3317497 A | 12-03-1998 |
| | | BR 9704364 A | 11-05-1999 |
| | | CA 2212269 A | 14-02-1998 |
| | | CN 1191073 A | 26-08-1998 |
| | | CZ 9702579 A | 16-12-1998 |
| | | JP 10279409 A | 20-10-1998 |
| | | NO 973619 A | 16-02-1998 |
| | | NZ 328511 A | 24-09-1998 |
| | | PL 321621 A | 16-02-1998 |
| | | SG 53039 A | 28-09-1998 |
| | | SK 109397 A | 03-06-1998 |

EPO FORM P0459

For more details about this annex : see Official Journal of the European Patent Office, No. 12/82